(19)

**Europäisches Patentamt**
**European Patent Office**
**Office européen des brevets**

(11) **EP 1 687 935 B1**

(12) **EUROPEAN PATENT SPECIFICATION**

(45) Date of publication and mention
of the grant of the patent:
**16.03.2011 Bulletin 2011/11**

(51) Int Cl.:
**H04L 12/24** *(2006.01)*    **H04L 29/06** *(2006.01)*

(21) Application number: **03780074.5**

(22) Date of filing: **27.11.2003**

(86) International application number:
**PCT/EP2003/013357**

(87) International publication number:
**WO 2005/053227 (09.06.2005 Gazette 2005/23)**

(54) **METHODS AND SYSTEM FOR MEASURING THE ROUND TRIP TIME IN PACKET SWITCHING TELECOMMUNICATION NETWORKS**

VERFAHREN UND VORRICHTUNG ZUR MESSUNG DER UMLAUFVERZÖGERUNGSZEIT IN EINEM PAKETVERMITTELNDEM TELEKOMMUNIKATIONSNETZ

PROCEDE ET SYSTEME PERMETTANT DE MESURER LE TEMPS DE PARCOURS ALLER-RETOUR DANS DES RESEAUX DE TELECOMMUNICATION A COMMUTATION PAR PAQUETS

(84) Designated Contracting States:
**AT BE BG CH CY CZ DE DK EE ES FI FR GB GR HU IE IT LI LU MC NL PT RO SE SI SK TR**

(43) Date of publication of application:
**09.08.2006 Bulletin 2006/32**

(73) Proprietor: **Telecom Italia S.p.A.**
**20123 Milano (IT)**

(72) Inventors:
• **DE NOIA, Giuseppe,**
**Telecom Italia S.p.A.**
**I-10148 Torino (IT)**
• **ROASIO, Andrea**
**I-10123 Torino (IT)**
• **BEONI, Maurizio,**
**Telecom Italia S.p.A.**
**I-10148 Torino (IT)**

(74) Representative: **Battipede, Francesco et al**
**Telecom Italia S.p.A.**
**Piazza L. Einaudi, 8**
**20124 MIlano (IT)**

(56) References cited:
**EP-A- 1 280 297**      **US-A1- 2002 072 333**
**US-A1- 2002 152 319**

**Description**

**TECHNICAL FIELD**

The present invention refers to managing packet communication in packet switching communication networks. In particular, the present invention refers to a method and related system for measuring the round trip time ("RTT") in the distribution of packets based upon Internet standard protocols, like Real-time Transport Protocol ("RTP") and associated Real-Time Control Protocol ("RTCP") and for managing the network communications on the basis of such RTT measurements.

**BACKGROUND ART**

The specifications of RTP and RTCP are described in the Internet Standard Request For Comments (RFC) 1889 issued on January 1 1996 ("RFC 1889").

RTP provides end-to-end network transport functions suitable for applications transmitting real-time data, such as audio, video or simulation data, over multicast or unicast network services for real-time services. The companion RTCP is based on the periodic transmission of control packets to all participants in a communication session, using the same distribution mechanism as the data packets. The primary function of RTCP packets is to provide feedback on the quality of the data distribution.

RFC 1889 specifies, among others, a "Sender Report" (or "SR") type of RTCP packet report for transmission and reception of statistics from end points and related end terminals ("ports") that are active packet senders.

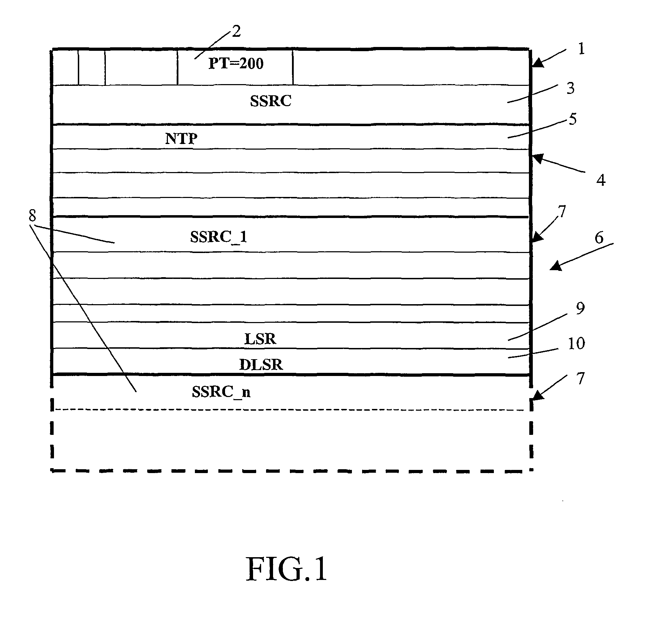

With reference to Fig.1, the data structure of SR packet includes:

A) an Header section 1 including, among others, the Packet Type ("PT") code 2, the PT code for SR being "200", and the Sender Synchronization Source Identifier ("SSRC") data 3 identifying the port ("Sender") originating this SR packet;
B) a Sender section 4 specifying data pertaining to said originating port, including, among others, the NTP Timestamp ("NTP") 5 specifying the wall clock time of said originating port when this SR packet is sent; and
C) a Report section 6 that may contain zero or more reception report blocks 7.

Each reception report block 7 conveys statistics on the reception of RTP/RTCP packets from a single source (port) and includes, among others, the following data:

- SSRC_n 8: identifying the port to which the data in said block pertain;
- Last SR timestamp ("LSR")9: the NTP timestamp received as part of the last SR packet received from said port SSRC_n; and
- Delay since Last SR ("DLSR")10: the delay between receiving said last SR packet and sending this SR packet.

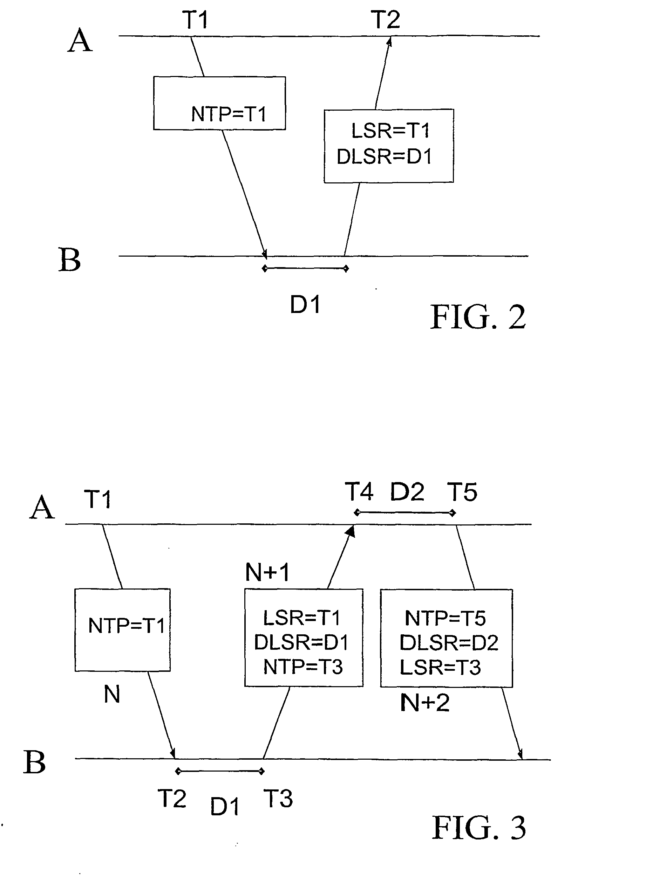

With reference to Fig 2, according to RFC 1889, the RTT between a port A and a port B may be measured at port A upon receiving from port B a SR packet having a reception report block referring to port A (SSRC_n = A) and specifying LSR = T1 and DLSR = D1, by recording the time T2 when said SR packet is received according the wall clock of port A and by calculating RTT in accordance with the following formula:

$$RTT = T2 - T1 - D1$$

This RTT measuring method requires the knowledge of said time T2, and therefore it can only be implemented by an end terminal connected to said port SSRC_n or by accessing the wall clock data recorded therein. This method is not applicable in those instances in which a telecom operator or a services provider needs to monitor RTT at any point of the network different from an end point or end terminal and/or has no access to data stored therein.

Other RTT monitoring methods known in the art are based upon the computation of the RTT of artificial packets injected in the network and back forwarded to the source once received from a node or port of the network. A method of this type is implemented in the Internet Control Message Protocol ("ICMP") described in IETF RFC 792 "Internet Control Message Protocol" issued on September 1981; it uses an artificial "echo" packet therein described.

Such artificial packet traffic methods fail to provide a measurement of the actual RTT experienced by true data packets during a communication session, because the sending and receipt of such artificial packets are asynchronous (not correlated) with respect to the true packet traffic of said session; furthermore, such methods are invasive since they increase the packet traffic of the network.

European Patent Application EP 1280297, published on January 29, 2003 discloses methods for measuring round trip time of the types described above in this Background Art section.

U.S.Patent Application 2002/152319, published on October 17, 2002 discloses a way of billing customers dynamically along the lines of network behaviour data.

## DISCLOSURE OF THE INVENTION

An object of the present invention is to provide a method and for measuring the actual RTT in the distribution, of true packets at any point of the network without creating artificial traffic in the network. As used herein, reference to such a computer program product is intended to be equivalent to reference to a computer-readable medium containing instructions for controlling a computer system to coordinate the performance of the method of the invention. Reference to "at least one" computer is obviously intended to highlight the possibility for the arrangement of the invention to be implemented in a de-centralized fashion.

## BRIEF DESCRIPTION OF DRAWINGS

The above and other features of the present invention will be better understood from the following description of a preferred embodiment of the invention, which is intended purely by way of example and is not to be construed as limiting, taken in conjunction with the accompanying drawings, where:

Figure 1: is schematic view of the RTCP protocol packet data structure;
Figure 2: is a diagrammatic illustration of the flow of the RTCP packets used for the computation of the RTT in accordance with the prior-art method described in the RFC 1889;
Figure 3 is a diagrammatic illustration of the flow of the RTCP packets used for the computation of the RTT in accordance with the method of the present invention;
Figure 4: is a schematic block view of the system for measuring the RTT in accordance with the present invention and for managing the network communications on the basis of such RTT measurements, in accordance with the present invention;
Figure 5: is a schematic view of the structure of a hash table of the system according to the invention; and
Figure 6: is a flow chart describing the functional steps of the system for measuring the RTT in accordance with the present invention.

## BEST MODE FOR CARRYING OUT THE INVENTION

In the following description, for simplicity, reference is made to communications of the type in which the participating ports in a communication session are no more than two and thus the related SR packets originated by a port may have no more than one report block referring to the other communicating port identified by its source identifier SSRC1 (such communication session is some time hereinafter also referred to as "call"). With reference to Figure 3, during a communication session between two ports A and B of a packet switching communication network, let N be a RTCP packet sent at time T1 (NTP = T1) from the port A and received by the port B at time T2.

Let N+1 be the SR packet sent by port B at time T3 (NTP = T3), after a delay D1 from the receipt of packet N, responsive to packet N, i.e. reporting in its report block LSR = T1 and DLSR = D1 and received by port A at time T4.

Likewise, let N+2 be the SR packet sent by port A at time T5 (NTP = T5), after a delay D2 from the receipt of the SR packet N+1, responsive to the SR packet N+1, i.e. reporting in its report block LSR = T3 and DLSR = D2.

The method in accordance with the invention basically comprises the steps of:

(a) detecting among the true packet traffic flowing through a point of the network two SR packets having report blocks and being correlated like the packets N+1 and N+2 described above i.e. referring to the same communication session between two ports, the second packet (N+2) being responsive to the first packet (N+1) and thus being transmitted by the destination port of the first packet and the LSR data of the second packet being equal to the NTP data of the first SR packet; and

(b) computing the RTT as a function (the algebric sum) of the propagation delays experienced in crossing the network by said first packet (N+1) and by the previous packet (N) to which the report block of said first packet (N+1) refers, in accordance with the following formula:

$$RT = T5 - T1 - D2 - D1.$$

It will be appreciated that the aforesaid computation is not affected by any possible lack of synchronization between the wall clocks of ports A and B, since the data time NTP2 (T5) and LSR1 (T1) are both measured by the same wall clock (of port A in fig.3)

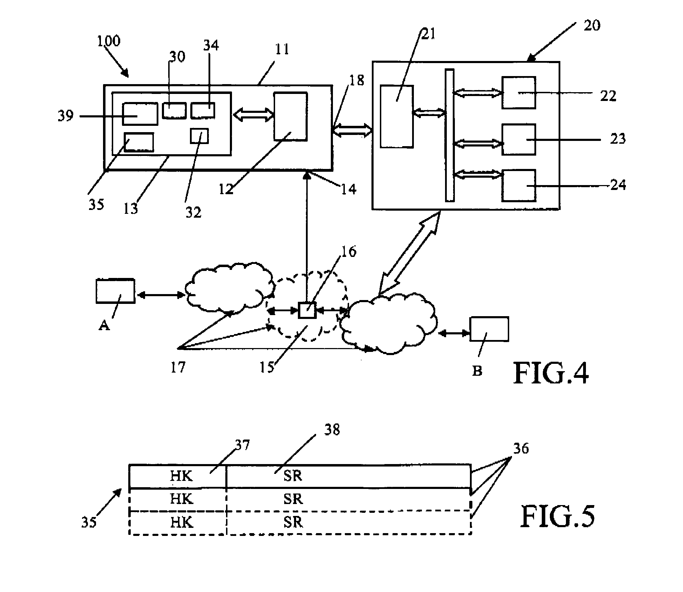

With reference to Figure 4, the system 100 for measuring the RTT according to the invention includes a computer 11 of known type, for instance based upon Linux operating system, comprising a central processing unit 12, a memory 13, an input port 14 connectable to any point 15 of the packet switching communication network 17 through a suitable splitter or TAP (Test Access Port) device 16 of know type, that allows capturing a copy of packet data flowing through such network point, without causing any data stream interference; the system 100 is operatively connected through its output port 18 to, and may even be considered as a subsystem of, the system 20 for managing the network comprising a Call Data Record (CDR) subsystem 21, a Billing subsystem '22, a Quality of Service (QoS) monitoring subsystem 23 and a Call Admission Control subsystem 24.

A computer program 30 of known type is loaded into the memory 13 and is suitable to run on the computer 11 for analyzing the packets captured by the device 16 and inputted into the computer 11 through port 14, selecting among them the RCTP packets and temporary storing a copy of the same in the portion 32 of the memory 13 organized to act as a first-in-first out (FIFO) buffer. Said functions of capturing, analyzing, selecting and storing packets are often referred to in the art collectively as "sniffing" packets. By way of example the sniffing computer program 30 may be the computer program known as "Tethereal" downloadable from the Internet site: http://www.ethereal.com, on November 16, 2003.

Another computer program 34 is loaded into the memory 13 and is suitable to run on the computer 11 in an interoperable way with the sniffing computer program 30 for implementing the method according to the invention. The memory 13 comprises a section 35, organized under the control of the computer program 34 as a hash table (see Figure 5) having a plurality of rows 36, where each row refers to a communication session in process between two ports of the network 17 and is suitable to store a hash key ("HK") 37 uniquely identifying said session and the last SR packet 38 relating to said session processed by the computer program 34, as described in more details below.

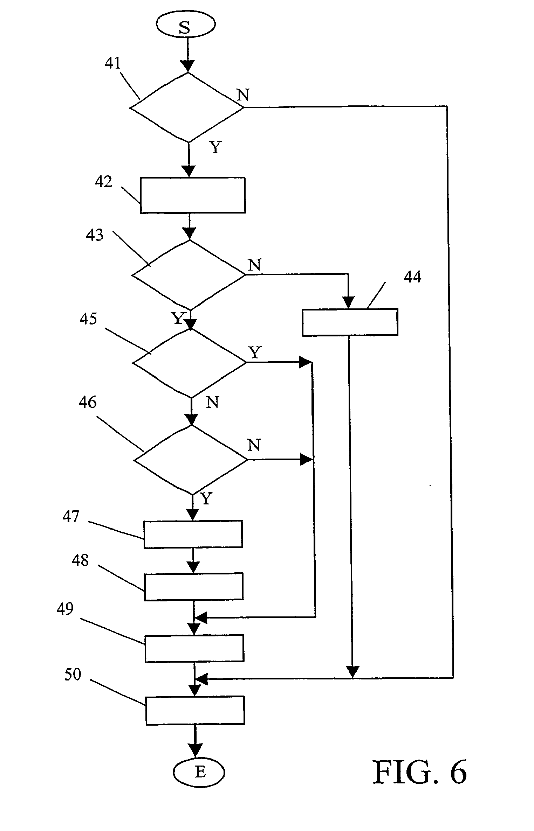

The memory 13 further comprises a section 39 organized under the control of the computer program 34 as an output file storing all the RTCP packets processed by said program 34, as described in more details below. With reference two Figure 6, the computer program 34 is suitable to operate the computer 10 for performing the processing steps described below with respect to each RTCP packet sniffed and stored into the buffer 32 by the sniffing computer program 30. Each run of the computer program 34 starts (at S) upon receiving from the sniffing computer program 30 a coded signal that a new RTCP packet has been stored in the buffer 32 and is ready for processing (hereinafter referred to as the "pocket under process") and proceeds through the following steps:

- step 41: checking if the packet under process meets all of the following conditions: is a packet of the sender Report type, has a report block and both the LSR data and DLSR data of its report block are different from zero, and in the negative case skipping to step 50; while in the affirmative case proceeding with step 42;
- step 42: computing the hash key 37 for the packet under process; by way of example, the algorithm for computing said key provides for ordering by increasing values the SSRC of the Sender and the SSRC of the (first) source SSRC1 reported by the packet under process and by prepending the lower SSRC value to the higher SSRC value;
- step 43: checking if the packet under process refers to a communication session for which a SR packet is already stored in the hash table 35 (hereinafter referred to as the "previous packet"), by comparing the hash key 37 computed in step 42 with each of the hash keys 37 stored in the hash table 35, and in the negative case continuing with step 44, while in the affirmative case skipping to step 45;
- step 44: creating a new row 36 in the hash table 35, storing the SR packet under process in association with its related hash key 37 in said new row 36 and then skipping to step 50;
- step 45: checking if said previous packet was originated by the same port of the packet under process i.e. checking whether the Sender SSRC of the previous packet is equal to the Sender SSRC of the packet under process and in the affirmative case skipping to step 49, while in the negative case continuing with step 46;
- step 46: checking if the NPT of said previous packet is equal to LSR reported by the packet under process and in the negative case skipping to step 49, while in the affirmative case proceeding with step 47; it will be appreciated that in such affirmative case said previous packet and the packet under process are correlated in the same way as the packet N+1 and respectively N+2 of Fig.3 above described;
- step 47: computing the RTT in accordance with the following formula:

$$RTT = NTP2 - LSR1 - DLSR2 - DLSR1$$

where:

NTP2 is the NTP time data of the packet under process (like the aforesaid (N+2) packet);
LSR1 is the LSR time data in the report block of said previous packet (like the aforesaid (N+1) packet);
DLSR1 is the DLSR delay data in the report block of said previous packet; and
DLSR2 is the DLSR delay data in the report block of the packet under process(N+2);

- step 48: creating a new data field in the report block of the packet under process and storing therein the computed RTT value;
- step 49: storing the packet under process (enriched with the computed RTT value, in case the steps 47 and 48 have been performed) in the hash table 35 in substitution of said previous packet;
- step 50: storing the packet under process in the output file 39 and then ending run (at E).

The SR packets stored in the output file 39, enriched with the computed RTT values as aforesaid, are accessible by the network management system 20 for operating and managing the network and the communication services rendered thereby, including, by way of example and without limitation, for performing one or more of the following functions:

(a) associating to the Call Data Record (CDR) of each communication session (or "call") in the CDR subsystem 21 the corresponding RTCP data of the output file 39, so enriching such CDR with data pertaining to the quality of the related call;
(b) processing, by the QoS monitoring subsystem 23, the RTCP data associated to the CDR files under (a) above, both on a per call basis and on an average statistical basis, to compute QoS data and other network performance and quality data (collectively "network behaviour related data") and, if such computed data fail to meet or exceed predetermined reference values pre-recorded in the QoS monitoring subsystem 23, to trigger network planning actions or other remedial actions suitable to improve performance and quality of communication services;
(c) processing, by the Billing subsystem 22, the RTCP data associated to the CDR files under (a) above for pricing and billing to the related customer each call on the basis the actual level of quality experienced for such call; e.g. (i) computing, on the basis of said RTCP data, an actual level of quality value associated with each call (it may also be the network behaviour related data for said call computed under (b) above by the QoS Monitoring Subsystem 23), (ii) comparing whether said actual level of quality value is less than that contractually provided for said customer as pre-recorded in the Billing subsystem and (iii) in the affirmative case, discounting the pre-recorded contractual price applicable to said customer of an amount directly related to the difference between said prescribed value and said actual value of quality level;
(d) processing, by the Call Admission Control subsystem 24, the RTCP data and computing data representatives of the actual network traffic and congestion conditions and, on the basis of the same, automatically controlling the admission in the network of new communication

sessions or the dropping of communication sessions in progress.

It will be appreciated that any of the functional steps under (b) (c) or (d) above may include, in particular, the steps of processing the RTT of any call, measured in accordance with the present invention, as part of the aforesaid computing steps and/or of checking if said measured RTT exceeds a predetermined value stored in the network management system 20 and, in the affirmative case, triggering a remedial action or providing an alerting signal.

Obvious modifications or variations are possible to the above description, in the components, circuit elements, logical elements, connections and contacts, as well as in the details of the flow charts, circuitry, functionality, method steps, protocols, packet format and structure and method of operation, without thereby departing from the scope of the invention as specified in the claims that follow.

## Claims

1. A method of measuring the round trip time in the communication of packets between ports of a packet switching communication network in which, among other packets, report packets are transmitted by transmitting ports to destination ports in response to previouspackets received from said respective destination ports, any of said report packet reporting at least the following data:

(i) identification code of the transmitting port (A), transmitting said report packet (N+2),
(ii) identification code of the destination port (B), destination of said report packet (N+2);
(iii) time (T5) of transmission of said report packet (N+2);

(iv) the transmission time (T1) of a forward packet (N);

(v) a delay (D2) between receiving a reverse packet (N+1) and transmitting said report packet (N+2),

wherein:

said reverse packet (N+1) is the packet in response to which the report packet (N+2) is sent and said forward packet (N) is the packet in response to which the reverse packet (N+1) is sent,

**characterized in that** it comprises the steps of:

(a) detecting at any point (15) of the network, among the packet traffic flowing there through, a first report packet (N+1) transmitted by a first port (B) to a second port (A) and a second report packet (N+2) transmitted by said second port (A) to said first port (B) responsive to said first report packet (N+1), said first port (B) and second port (A) being different from said detecting point (15);

(b) computing the round trip time (RTT) between said first and second ports in accordance with the following equation;

$$RTT = NTP2 - LSR1 - DLSR1 - DLSR2$$

where

NTP2 is the report packet transmission time (T5,5) reported in said second report packet (N+2);

LSR1 is the transmission (T1,9) time second of a forward packet reported in said second report packet (N+2) ;

DLSR1 is the delay (D1,10) reported in said first report packet (N+1) and

DLSR2 is the delay (D2,10) reported in said second report packet (N+2).

2. The method in accordance with claim 1 **characterized in that** it further comprises the additional step of (c) including the computed round trip time value as an additional data to the data of any of said report packet.

3. The method in accordance with claim 1 wherein said detecting step (a) comprises the following steps;

(a1) detecting each report packet flowing through said point of the network;

(a2) checking if a newly detected report packet relates to the same communication between two ports of a previously detected report packet;

(a3) if the check under step(a2) is negative, storing said newly detected report packet;

(a4) if the check under step (a2) is affirmative,

checking if said newly detected report packet is responsive to said previously detected report packet;

4. The method in accordance with claim 3 wherein said detecting step (a) further comprises the following step: (a5) if the check under step (a2) is affirmative and said newly detected report packet is transmitted by the same port of said previously detected report packet, storing said newly detected report packet in substitution of said previously detected report packet.

5. The method in accordance with claim 3 wherein said checking step (a2) comprises, associating to each newly detected report packet a key uniquely identifying the communication session between the two ports to which said newly detected report packet relates; and comparing said key with each of the keys associated to previously detected and stored report packets.

6. The method in accordance with claim 3 wherein said checking step (a4) comprises checking if the transmission time (5) of said previously detected report packet is equal to the transmission time of a forward packet (9) of said newly detected report packet.

7. The method in accordance with claim 3 **characterized in that** it comprises the following additional steps

(c) including the computed round trip time value as an additional data of said report packet; and

(d) storing said record packet including said computed round trip time value in substitution of said previously detected report packet.

8.  The method in accordance with claim 1 wherein said report packet detecting step (a) comprises the step of sniffing packets flowing through said network point.

9.  A method in accordance with claim 1 comprising the further step of managing the network on the basis of said computed round trip time data.

10. A method in accordance with claim 9 wherein said managing step includes checking if said measured round trip time data exceeds a predetermined value and, in the affirmative case, generating a coded signal.

11. A method in accordance with claim 9 wherein said managing step includes associating said round trip time computed data to a call data record of the communication session to which said data relate.

12. A method in accordance with claim 11 wherein said managing step includes:

    - computing network behaviour related data on the basis of said round trip time data;
    - checking if network behaviour related data fail to meet predetermined reference data; and, in the negative case,
    - triggering a remedial action.

13. A method in accordance with claim 12 wherein said remedial action comprises computing a discount of the price of a communication session for which said network behaviour related data fail to meet said predetermined reference data.

14. A method in accordance with claims 12 wherein said remedial action comprises a network-planning action.

15. A method in accordance with claim 12 wherein said remedial action comprises dropping a communication session;

16. A method in accordance with claim 12 wherein said remedial action comprises temporary inhibiting admission of a further communication session.

17. A method in accordance with any of the preceding claim wherein any of said report packets is a RTCP packet of the Sender Report type with report block, in accordance with the Internet Real-time Control Protocol-RTCP protocol.

18. A system for managing a packet switching communication network, in which, among other packets, report packets are transmitted by transmitting ports to destination ports in response to previous packets received from said respective destination ports, any or said report packet reporting at least the following data:

    (i) identification code of the transmitting port (A), transmitting said report packet (N+2),
    (ii) identification code of the destination port (B), destination of said report packet (N+2);
    (iii) time (T5) of transmission of said report packet (N+2);
    (iv) the transmission time (T1) of a forward packet (N);
    (v) a delay (D2) between receiving a reverse packet (N+1) and transmitting said report packet (N+2),

    wherein:

    said reverse packet (N+1) is the packet in response to which the report packet (N+2) is sent and said forward packet (N) is the packet in response to which the reverse packet (N+1) is sent,
    said system comprising a round trip time measuring subsystem and a network management subsystem for processing round trip time data monitored by said measuring subsystem, **characterized in that** said measuring subsystem is suitable to:

    (a) detect at any point of the network, among the packet traffic flowing there through, a first report packet (N+1) transmitted by a first port (B) to a second port (A) and a second report packet (N+2) transmitted by said second port (A) to said first port (B) responsive to said first report packet (N+1), said first (B) and second (A) ports being different from said detecting point (15); and
    (b) compute the round trip time between said first and second ports in accordance with the following equation:

$$RTT = NTP2 - LSR1 - DLSR1 - DLSR2$$

where

NTP2 is the report packet transmission time (T5,5) reported in said second report packet (N+2);

LSR1 is the transmission (T1, 9) time of a forward packet reported in said second report packet (N+2) ;

DLSR1 is the delay (D1,10) reported in said second report packet (N+1) and

DLSR2 is the delay (D2,10) reported in said report packet (N+2).

19. A system in accordance with claim 18 wherein said measuring subsystem comprises a sniffer operatively connectable at any point of said network, for sniffing packets flowing therethrough, a memory for selectively storing sniffed packets and a processor suitable to process the sniffed packets so as to identify said first and second report packets and to compute the round trip time.

20. A system in accordance with claim 19 wherein said network management subsystem is suitable to check if the round trip time computed by said measuring subsystem exceeds a predetermined value and, in the affirmative case, to generate a coded signal.

21. A system in accordance with claim 19 further comprising a call detail record subsystem for recording call detail data relating to each communication session and for associating to said call detail data the round trip time data computed by said measuring subsystem and relating to the same communication session.

22. A system in accordance with claim 19 wherein said network management subsystem is suitable to compute network behaviour related data on the basis of said computed round trip time data to check if said computed network behaviour related data fail to meet predetermined reference data and, in the negative case, to trigger a remedial action.

23. A system in accordance with claim 22 wherein said triggered action comprises computing a discount of the price of a communication session for which said network behaviour related data fail to meet said predetermined reference data.

24. A system in accordance with claim 22 wherein said triggered action comprises a network planning action.

25. A system in accordance with claim 22 wherein said triggered action comprises dropping a communication session for which said network behaviour related data fail to meet said predetermined reference data.

26. A system in accordance with claim 22 wherein said triggered action comprises temporary inhibiting admission of a further communication session.

27. A system in accordance with claim 19 wherein any of said report packets is an RTCP packet of the Sender Report type with report block, in accordance with the Internet Real-time Control Protocol protocol.

28. A packet switching communication network including at least two nodes linked by a communication link and a managing system according to any of claims 18-27.

29. A computer program product loadable in the memory of at least one computer and including software code portion for performing the method of any of the claim from 1 to 17.

**Patentansprüche**

1. Verfahren zur Messung der Umlaufzeit bei der Kommunikation von Paketen zwischen Ports eines paketvermittelnden Kommunikationsnetzes, in dem neben anderen Paketen Berichtspakete durch Übertragsports an Zielports als Antwort auf vorherige Pakete, die von den jeweiligen Zielports empfangen wurden, übertragen werden, wobei ein beliebiges der Berichtspakete zumindest die folgenden Daten berichtet:

(i) Kennungscode des Übertragsports (A), der das Berichtspaket (N+2) überträgt,
(ii) Kennungscode des Zielports (B), Ziel des Berichtspakets (N+2);

(iii) Zeit (T5) der Übertragung des Berichtspakets (N+2);
(iv) Übertragungszeit (T1) eines Vorwärtspakets (N);
(v) eine Verzögerung (D2) zwischen dem Empfangen eines Rückwärtspakets (N+1) und dem Übertragen des Berichtspakets (N+2),

wobei:

das Rückwärtspaket (N+1) das Paket ist, auf das als Antwort das Berichtspaket (N+2) gesendet wird, und das Vorwärtspaket (N) das Paket ist, auf das als Antwort das Rückwärtspaket (N+1) gesendet wird, **dadurch gekennzeichnet, dass** das Verfahren die folgenden Schritte umfasst:

(a) Erfassen an einem beliebigen Punkt (15) des Netzes in dem **dadurch** fließenden Paketverkehr eines ersten Berichtspakets (N+1), das von einem ersten Port (B) an einen zweiten Port (A) übertragen wird, und eines zweiten Berichtspakets (N+2), das von dem zweiten Port (A) an den ersten Port (B) als Reaktion auf das erste Berichtspaket (N+1) übertragen wird, wobei der erste Port (B) und der zweite Port (A) sich von dem Erfassungspunkt (15) unterscheiden;
(b) Berechnen der Umlaufzeit (round trip time, RTT) zwischen dem ersten und dem zweiten Port gemäß der folgenden Gleichung:

$$RTT = NTP2 - LSR1 - DLSR1 - DLSR2,$$

wobei
NTP2 die Berichtspaket-Übertragungszeit (T5,5) ist, die in dem zweiten Berichtspaket (N+2) berichtet wird;
LSR1 die Übertragungszeit (T1,9) eines Vorwärtspakets ist, die in dem zweiten Berichtspaket (N+2) berichtet wird;
DLSR1 die Verzögerung (D1,10) ist, die in dem ersten Berichtspaket (N+1) berichtet wird; und
DLSR2 die Verzögerung (D2,10) ist, die in dem zweiten Berichtspaket (N+2) berichtet wird.

2. Verfahren nach Anspruch 1, **dadurch gekennzeichnet, dass** es weiterhin den folgenden zusätzlichen Schritt umfasst:

(c) Einschließen des Wertes der berechneten Umlaufzeit als zusätzliche Daten zu den Daten eines beliebigen der Berichtspakete.

3. Verfahren nach Anspruch 1, wobei der Erfassungsschritt (a) die folgenden Schritte umfasst:

(a1) Erfassen jedes Berichtspakets, das durch den Punkt des Netzes fließt;
(a2) Prüfen, ob ein neu erfasstes Berichtspaket mit derselben Kommunikation zwischen zwei Ports eines vorher erfassten Berichtspakets zusammenhängt;
(a3) wenn die Prüfung unter Schritt (a2) negativ verläuft, Speichern des neu erfassten Berichtspakets;
(a4) wenn die Prüfung unter Schritt (a2) positiv verläuft, Prüfen, ob das neu erfasste Berichtspaket eine Antwort auf das vorher erfasste Berichtspaket ist.

4. Verfahren nach Anspruch 3, wobei der Erfassungsschritt (a) weiterhin den folgenden Schritt umfasst:

(a5) wenn die Prüfung unter Schritt (a2) positiv verläuft und das neu erfasste o Berichtspaket von demselben Port wie das vorher erfasste Berichtspaket übertragen wird, Speichern des neu erfassten Berichtspakets anstelle des vorher erfassten Berichtspakets.

5. Verfahren nach Anspruch 3, wobei der Prüfschritt (a2) das Assoziieren eines Schlüssels mit jedem neu erfassten Berichtspaket, der eindeutig die Kommunikationssitzung zwischen den zwei Ports identifiziert, mit der das neu erfasste Berichtspaket zusammenhängt; und
das Vergleichen des Schlüssels mit jedem der Schlüssel umfasst, die mit vorher erfassten und gespeicherten Berichtspaketen assoziiert wurden.

6. Verfahren nach Anspruch 3, wobei der Prüfschritt (a4) das Prüfen umfasst, ob die Übertragungszeit (5) des vorher erfassten Berichtspakets der Übertragungszeit (9) eines Vorwärtspakets des neu erfassten Berichtspakets entspricht.

7. Verfahren nach Anspruch 3, **dadurch gekennzeichnet, dass** es die folgenden zusätzlichen Schritte umfasst:

(c) Einschließen des Wertes der berechneten Umlaufzeit als zusätzliche Daten des Berichtspakets und
(d) Speichern des Berichtspakets, das den Wert der berechneten Umlaufzeit einschließt, anstelle des vorher erfassten Berichtspakets.

8. Verfahren nach Anspruch 1, wobei der Schritt des Erfassens von Berichtspaketen (a) den Schritt des Sniffens von Paketen umfasst, die durch den Netzpunkt fließen.

9. Verfahren nach Anspruch 1, das den weiteren Schritt des Verwaltens des Netzes auf Grundlage der berechneten Umlaufzeitdaten umfasst.

10. Verfahren nach Anspruch 9, wobei der Verwaltungsschritt das Prüfen, ob die gemessenen Umlaufzeitdaten einen vorher bestimmten Wert überschreiten, und im positiven Fall das Erzeugen eines kodierten Signals umfasst.

11. Verfahren nach Anspruch 9, wobei der Verwaltungsschritt das Assoziieren der berechneten Umlaufzeitdaten mit einem Anrufdatensatz der Kommunikationssitzung beinhaltet, mit der die Daten zusammenhängen.

12. Verfahren nach Anspruch 11, wobei der Verwaltungsschritt Folgendes beinhaltet:

- Berechnen von mit dem Netzverhalten zusammenhängenden Daten auf Grundlage der Umlaufzeitdaten;
- Prüfen, ob die mit dem Netzverhalten zusammenhängenden Daten scheitern, vorher bestimmten Referenzdaten zu entsprechen; und im negativen Fall
- Auslösen einer Abhilfemaßnahme.

13. Verfahren nach Anspruch 12, wobei die Abhilfemaßnahme das Berechnen eines Nachlasses des Preises einer Kommunikationssitzung umfasst, für die die mit dem Netzverhalten zusammenhängenden Daten scheitern, den vorher bestimmten Referenzdaten zu entsprechen.

14. Verfahren nach Anspruch 12, wobei die Abhilfemaßnahme eine Netzplanungsmaßnahme umfasst.

15. Verfahren nach Anspruch 12, wobei die Abhilfemaßnahme das Fallenlassen einer Kommunikationssitzung umfasst.

16. Verfahren nach Anspruch 12, wobei die Abhilfemaßnahme das vorübergehende Unterbinden des Zulassens einer weiteren Kommunikationssitzung umfasst.

17. Verfahren nach einem der vorhergehenden Ansprüche, wobei ein beliebiges der Berichtspakete ein RCTP-Paket der Senderberichtsart mit Berichtsblock gemäß dem Internet-Echtzeit-Steuerprotokoll (Real-Time Control Protocol, RCTP-Protokoll) ist.

18. System zur Verwaltung eines paketvermittelnden Kommunikationsnetzes, in dem neben anderen Paketen Berichtspakete durch Übertragungsports an Zielports als Antwort auf vorherige Pakete, die von den jeweiligen Zielports empfangen wurden, übertragen werden, wobei ein beliebiges der Berichtspakete zumindest die folgenden Daten berichtet:

(i) Kennungscode des Übertragungsports (A), der das Berichtspaket (N+2) übertragt,
(ii) Kennungscode des Zielports (B), Ziel des Berichtspakets (N+2);
(iii) Zeit (T5) der Übertragung des Berichtspakets (N+2);
(iv) Übertragungszeit (T1) eines Vorwärtspakets (N);
(v) eine Verzögerung (D2) zwischen dem Empfangen eines Rückwärtspakets (N+1) und dem Übertragen des Berichtspakets (N+2),

wobei:

das Rückwärtspaket (N+1) das Paket ist, auf das als Antwort das Berichtspaket (N+2) gesendet wird, und das Vorwärtspaket (N) das Paket ist, auf das als Antwort das Rückwärtspaket (N+1) gesendet wird, wobei das System ein Umlaufzeitmessungsuntersystem und ein Netzverwaltungsuntersystem zur Verarbeitung von Umlaufzeitdaten, die von dem Messungsuntersystem überwacht werden, umfasst, **dadurch gekennzeichnet, dass** das Messungsuntersystem für folgendes geeignet ist:

(a) das Erfassen an einem beliebigen Punkt des Netzes in dem **dadurch** fließenden Paketverkehr eines ersten Berichtspakets (N+1), das von einem ersten Port (B) an einen zweiten Port (A) übertragen wird, und eines zweiten Berichtspakets (N+2), das von dem zweiten Port (A) an den ersten Port (B) als Reaktion auf das erste Berichtspaket (N+1) übertragen wird, wobei der erste Port (B) und der zweite Port (A) sich von dem Erfassungspunkt (15) unterscheiden;

(b) das Berechnen der Umlaufzeit zwischen dem ersten und dem zweiten Port gemäß der folgenden Gleichung:

$$RTT = NTP2 - LSR1 - DLSR1 - DLSR2,$$

wobei

NTP2 die Berichtspaket-Übertragungszeit (T5,5) ist, die in dem zweiten Berichtspaket (N+2) berichtet wird;

LSR1 die Übertragungszeit (T1,9) eines Vorwärtspakets ist, die in dem zweiten Berichtspaket (N+2) berichtet wird;

DLSR1 die Verzögerung (D1,10) ist, die in dem zweiten Berichtspaket (N+1) berichtet wird; und

DLSR2 die Verzögerung (D2,10) ist, die in dem Berichtspaket (N+2) berichtet wird.

19. System nach Anspruch 18, wobei das Messungsuntersystem einen Sniffer, der an einem beliebigen Punkt des Netzes operativ angeschlossen werden kann, zum Sniffen von Paketen, die **dadurch** fließt, einen Speicher zum selektiven Speichern gesniffter Pakete und einen Prozessor, der für das Verarbeiten der gesnifften Pakete, um das erste und das zweite Berichtspaket zu identifizieren, und das Berechnen der Umlaufzeit geeignet ist, umfasst.

20. System nach Anspruch 19, wobei das Netzverwaltungsuntersystem dafür geeignet ist zu prüfen, ob die Umlaufzeit, die von dem Messungsuntersystem berechnet wurde, einen vorher bestimmten Wert überschreitet, und im positiven Fall ein kodiertes Signal zu erzeugen.

21. System nach Anspruch 19, das weiterhin ein Anrufeinzelheitenaufzeichnungsuntersystem zum Aufzeichnen von Anrufeinzelheitendaten, die mit jeder Kommunikationssitzung zusammenhängen, und zum Assoziieren der Umlaufzeitdaten, die von dem Messungsuntersystem berechnet wurden und mit derselben Kommunikationssitzung zusammenhängen, mit den Anrufeinzelheitendaten umfasst.

22. System nach Anspruch 19, wobei das Netzverwaltungsuntersystem für das Berechnen von mit dem Netzverhalten zusammenhängenden Daten auf Grundlage der berechneten Umlaufzeitdaten, das Prüfen, ob die berechneten mit dem Netzverhalten zusammenhängenden Daten scheitern, vorher bestimmten Referenzdaten zu entsprechen, und im negativen Fall das Auslösen einer Abhilfemaßnahme geeignet ist.

23. System nach Anspruch 22, wobei die ausgelöste Maßnahme das Berechnen eines Nachlasses des Preises einer Kommunikationssitzung umfasst, für die die mit dem Netzverhalten zusammenhängenden Daten scheitern, den vorher bestimmten Referenzdaten zu entsprechen.

24. System nach Anspruch 22, wobei die ausgelöste Maßnahme eine Netzplanungsmaßnahme umfasst.

25. System nach Anspruch 22, wobei die ausgelöste Maßnahme das Fallenlassen einer Kommunikationssitzung umfasst, für die die mit dem Netzverhalten zusammenhängenden Daten scheitern, den vorher bestimmten Referenzdaten zu entsprechen.

26. System nach Anspruch 22, wobei die ausgelöste Maßnahme das vorübergehende Unterbinden des Zulassens einer weiteren Kommunikationssitzung umfasst.

27. System nach Anspruch 19, wobei ein beliebiges der Berichtspakete ein RCTP-Paket der Senderberichtsart mit Berichtsblock gemäß dem Internet-Echtzeit-Steuerprotokoll ist.

**28.** Paketvermitteltes Kommunikationsnetz, das mindestens zwei Knoten, die mittels einer Nachrichtenverbindung verbunden sind, und ein Verwaltungssystem nach einem der Ansprüche 18 - 27 beinhaltet.

**29.** Computerprogrammprodukt, das in den Speicher mindestens eines Computers geladen werden kann und einen Softwarecodeteil zur Durchführung des Verfahrens nach einem der Ansprüche 1 bis 17 beinhaltet.

**Revendications**

**1.** Procédé de mesure du temps de transmission aller-retour dans la communication de paquets entre des ports d'un réseau de communication à commutation de paquets dans lequel, parmi d'autres paquets, des paquets de rapport sont transmis par des ports de transmission à des ports de destination en réponse à des paquets antérieurs reçus à partir desdits ports de destination respectifs, un quelconque desdits paquets de rapport rapportant au moins les données suivantes :

(i) le code d'identification du port de transmission (A), transmettant ledit paquet de rapport (N+2),
(ii) le code d'identification du port de destination (B), destination dudit paquet de rapport (N+2),
(iii) le temps (T5) de transmission dudit paquet de rapport (N+2),
(iv) le temps de transmission (T1) d'un paquet d'aller (N),
(v) un retard (D2) entre la réception d'un paquet de retour (N+1) et la transmission dudit paquet de rapport (N+2), dans lequel :

ledit paquet de retour (N+1) est le paquet en réponse auquel le paquet de rapport (N+2) est envoyé et ledit paquet d'aller (N) est le paquet en réponse auquel le paquet de retour (N+1) est envoyé,

**caractérisé en ce qu'**il comprend les étapes consistant à :

(a) détecter à un point quelconque (15) du réseau, parmi le trafic de paquets passant à travers celui-ci, un premier paquet de rapport (N+1) transmis par un premier port (B) à un second port (A) et un second paquet de rapport (N+2) transmis par ledit second port (A) audit premier port (B) en réponse audit premier paquet de rapport (N+1), lesdits premier port (B) et second port (A) étant différents dudit point de détection (15),
(b) calculer le temps de transmission aller-retour (« Round Trip Time » ou RTT) entre lesdits premier et second ports selon l'équation suivante :

$$RTT = NTP2 - LSR1 - DLSR1 - DLSR2$$

où
NTP2 est le temps de transmission de paquet de rapport (T5, 5) rapporté dans ledit second paquet de rapport (N+2),
LSR1 est le temps de transmission (T1, 9) d'un paquet d'aller rapporté dans ledit second paquet de rapport (N+2),
DLSR1 est le retard (D1, 10) rapporté dans ledit premier paquet de rapport (N+1) et
DLSR2 est le retard (D2, 10) rapporté dans ledit second paquet de rapport (N+2).

**2.** Procédé selon la revendication 1, **caractérisé en ce qu'**il comprend en outre l'étape supplémentaire consistant à :

(c) inclure la valeur calculée de temps de transmission aller-retour en tant que données supplémentaires dans les données d'un quelconque desdits paquets de rapport.

**3.** Procédé selon la revendication 1, dans lequel ladite étape (a) consistant à détecter comprend les étapes suivantes consistant à :

(a1) détecter chaque paquet de rapport passant à travers ledit point du réseau,
(a2) contrôler si un paquet de rapport nouvellement détecté est connexe à la même communication entre deux ports d'un paquet de rapport détecté auparavant,
(a3) si le contrôle de l'étape (a2) est négatif, stocker ledit paquet de rapport nouvellement détecté ;
(a4) si le contrôle de l'étape (a2) est affirmatif, contrôler si ledit paquet de rapport nouvellement détecté est en réponse audit paquet de rapport détecté auparavant.

4. Procédé selon la revendication 3, dans lequel ladite étape (a) consistant à détecter comprend en outre l'étape suivante consistant à :

(a5) si le contrôle de l'étape (a2) est affirmatif et ledit paquet de rapport nouvellement détecté est transmis par le même port dudit paquet de rapport détecté auparavant, stocker ledit paquet de rapport nouvellement détecté en substitution dudit paquet de rapport détecté auparavant.

5. Procédé selon la revendication 3, dans lequel ladite étape (a2) consistant à contrôler comprend les étapes consistant à associer à chaque paquet de rapport nouvellement détecté une clef identifiant de façon unique la session de communication entre les deux ports à laquelle ledit paquet de rapport nouvellement détecté est connexe ; et comparer ladite clef à chacune des clefs associées à des paquets de rapport auparavant détectés et stockés.

6. Procédé selon la revendication 3, dans lequel ladite étape (a4) consistant à contrôler comprend l'étape consistant à contrôler si le temps de transmission (5) dudit paquet de rapport détecté auparavant est égal au temps de transmission d'un paquet d'aller (9) dudit paquet de rapport nouvellement détecté.

7. Procédé selon la revendication 3, **caractérisé en ce qu'**il comprend les étapes supplémentaires suivantes consistant à :

(c) inclure la valeur calculée de temps de transmission aller-retour en tant que données supplémentaires dudit paquet de rapport ; et
(d) stocker ledit paquet de rapport comprenant ladite valeur calculée de temps de transmission aller-retour en substitution dudit paquet de rapport détecté auparavant.

8. Procédé selon la revendication 1, dans lequel ladite étape (a) consistant à détecter un paquet de rapport comprend l'étape consistant à renifler des paquets passant à travers ledit point de réseau.

9. Procédé selon la revendication 1, comprenant l'étape supplémentaire consistant à gérer le réseau sur la base desdites données calculées de temps de transmission aller-retour.

10. Procédé selon la revendication 9, dans lequel ladite étape consistant à gérer comprend les étapes consistant à contrôler si lesdites données mesurées de temps de transmission aller-retour dépassent une valeur prédéterminée et, dans le cas affirmatif, générer un signal codé.

11. Procédé selon la revendication 9, dans lequel ladite étape consistant à gérer comprend l'étape consistant à associer lesdites données calculées de temps de transmission aller-retour à un enregistrement de données d'appel de la session de communication à laquelle lesdites données sont connexes.

12. Procédé selon la revendication 11, dans lequel ladite étape consistant à gérer comprend :

- un calcule des données connexes au comportement de réseau sur la base desdites données de temps de transmission aller-retour ;
- un contrôle si des données connexes au comportement de réseau ne satisfont pas des données de référence prédéterminées, et, dans le cas négatif,
- un déclenchement d'une action corrective.

13. Procédé selon la revendication 12, dans lequel ladite action corrective comprend le fait de calculer un rabais du prix d'une session de communication pour laquelle lesdites données connexes au comportement de réseau ne satisfont pas lesdites données de référence prédéterminées.

14. Procédé selon la revendication 12, dans lequel ladite action corrective comprend une action de planification de réseau.

15. Procédé selon la revendication 12, dans lequel ladite action corrective comprend le fait d'abandonner une session de communication.

**16.** Procédé selon la revendication 12, dans lequel ladite action corrective comprend le fait d'empêcher temporairement l'admission d'une session de communication supplémentaire.

**17.** Procédé selon une quelconque revendication précédente, dans lequel un quelconque desdits paquets de rapport est un paquet RTCP du type rapport d'expéditeur avec bloc de rapport, selon le protocole RTCP (« Internet Real-time Control Protocol »).

**18.** Système pour gérer un réseau de communication à commutation de paquets, dans lequel, parmi d'autres paquets, des paquets de rapport sont transmis par des ports de transmission à des ports de destination en réponse à des paquets antérieurs reçus à partir desdits ports de destination respectifs, un quelconque desdits paquets de rapport rapportant au moins les données suivantes :

(i) le code d'identification du port de transmission (A), transmettant ledit paquet de rapport (N+2),
(ii) le code d'identification du port de destination (B), destination dudit paquet de rapport (N+2),
(iii) le temps (T5) de transmission dudit paquet de rapport (N+2),
(iv) le temps de transmission (T1) d'un paquet d'aller (N),
(v) un retard (D2) entre la réception d'un paquet de retour (N+1) et la transmission dudit paquet de rapport (N+2), dans lequel :

ledit paquet de retour (N+1) est le paquet en réponse auquel le paquet de rapport (N+2) est envoyé et ledit paquet d'aller (N) est le paquet en réponse auquel le paquet de retour (N+1) est envoyé,
ledit système comprenant un sous-système de mesure de temps de transmission aller-retour et un sous-système de gestion de réseau pour traiter des données de temps de transmission aller-retour surveillées par ledit sous-système de mesure, **caractérisé en ce que** ledit sous-système de mesure est approprié pour :

(a) détecter à un point quelconque du réseau, parmi le trafic de paquets passant à travers celui-ci, un premier paquet de rapport (N+1) transmis par un premier port (B) à un second port (A) et un second paquet de rapport (N+2) transmis par ledit second port (A) audit premier port (B) en réponse audit premier paquet de rapport (N+1), lesdits premier (B) et second (A) ports étant différents dudit point de détection (15) et
(b) calculer le temps de transmission aller-retour entre lesdits premier et second ports selon l'équation suivante :

$$RTT = NTP2 - LSR1 - DLSR1 - DLSR2$$

où
NTP2 est le temps de transmission de paquet de rapport (T5, 5) rapporté dans ledit second paquet de rapport (N+2),
LSR1 est le temps de transmission (T1, 9) d'un paquet d'aller rapporté dans ledit second paquet de rapport (N+2),
DLSR1 est le retard (D1, 10) rapporté dans ledit second paquet de rapport (N+1) et
DLSR2 est le retard (D2, 10) rapporté dans ledit paquet de rapport (N+2).

**19.** Système selon la revendication 18, dans lequel ledit sous-système de mesure comprend un analyseur de réseau connectable de façon opérationnelle à un point quelconque dudit réseau, pour renifler des paquets passant à travers celui-ci, une mémoire pour stocker sélectivement des paquets reniflés et un processeur approprié pour traiter les paquets reniflés afin d'identifier lesdits premier et second paquets de rapport et de calculer le temps de transmission aller-retour.

**20.** Système selon la revendication 19, dans lequel ledit sous-système de gestion de réseau est approprié pour contrôler si le temps de transmission aller-retour calculé par ledit sous-système de mesure dépasse une valeur prédéterminée et, dans le cas affirmatif, pour générer un signal codé.

**21.** Système selon la revendication 19, comprenant en outre un sous-système d'enregistrement de détail d'appel pour enregistrer des données de détail d'appel concernant chaque session de communication et pour associer auxdites données de détail d'appel les données de temps de transmission aller-retour calculées par ledit sous-système de mesure et concernant la même session de communication.

**22.** Système selon la revendication 19, dans lequel ledit sous-système de gestion de réseau est approprié pour calculer des données connexes au comportement de réseau sur la base desdites données calculées de temps de transmission aller-retour, pour contrôler si lesdites données calculées connexes au comportement de réseau ne satisfont pas des données de référence prédéterminées et, dans le cas négatif, pour déclencher une action corrective.

**23.** Système selon la revendication 22, dans lequel ladite action déclenchée comprend le fait de calculer un rabais du prix d'une session de communication pour laquelle lesdites données connexes au comportement de réseau ne satisfont pas lesdites données de référence prédéterminées.

**24.** Système selon la revendication 22, dans lequel ladite action déclenchée comprend une action de planification de réseau.

**25.** Système selon la revendication 22, dans lequel ladite action déclenchée comprend le fait d'abandonner une session de communication pour laquelle lesdites données connexes au comportement de réseau ne satisfont pas lesdites données de référence prédéterminées.

**26.** Système selon la revendication 22, dans lequel ladite action déclenchée comprend le fait d'empêcher temporairement l'admission d'une session de communication supplémentaire.

**27.** Système selon la revendication 19, dans lequel un quelconque desdits paquets de rapport est un paquet RTCP du type rapport d'expéditeur avec bloc de rapport, selon le protocole RTCP (« Internet Real-time Control Protocol »).

**28.** Réseau de communication à commutation de paquets comprenant au moins deux noeuds liés par une liaison de communication et un système de gestion selon une quelconque des revendications 18 à 27.

**29.** Produit-programme informatique pouvant être chargé dans la mémoire d'au moins un ordinateur et comprenant une partie de code logiciel pour réaliser le procédé selon une quelconque des revendications 1 à 17.

**FIG.1**

FIG. 2

FIG. 3

FIG.4

FIG.5

FIG. 6

**REFERENCES CITED IN THE DESCRIPTION**

**Patent documents cited in the description**

- EP 1280297 A

- US 2002152319 A

**Non-patent literature cited in the description**

- *Internet Standard Request For Comments (RFC) 1889,* 01 January 1996

- Internet Control Message Protocol. *IETF RFC 792,* September 1981